# EUROPEAN PATENT SPECIFICATION

(11) **EP 3 572 200 B1**
(45) Date of publication and mention of the grant of the patent: **21.04.2021**
(21) Application number: 18173636.4
(22) Date of filing: 22.05.2018
(51) Int. Cl.: B29C 41/06, B29D 22/00, B29C 63/18, B65D 25/34, B65D 1/12, B65D 88/08, E03B 11/00, B29C 63/22, B29L 31/00, B29L 9/00

(54) **A METHOD FOR REINFORCING A ROTATIONAL-MOLDED TANK AND A ROTATIONAL-MOLDED TANK**
VERFAHREN ZUR VERSTÄRKUNG EINES ROTATIONSGEFORMTEN BEHÄLTERS UND ROTATIONSGEFORMTER BEHÄLTER
PROCÉDÉ DE RENFORCEMENT D'UN RÉSERVOIR MOULÉ PAR ROTATION ET RÉSERVOIR MOULÉ PAR ROTATION

(43) Date of publication of application: 27.11.2019
(73) Proprietor: Cipax AB, 763 93 Skebobruk (SE)
(72) Inventor: GUSTAFSSON, Anders, 763 43 Hallstavik (SE)
(74) Representative: Bergenstråhle Group AB

(56) References cited:
- CA-C- 1 283 063
- US-A- 5 430 927
- US-A1- 2005 129 889
- US-A1- 2014 008 372

## Description

### Technical field

The invention considers a method for reinforcing a rotational-molded tank preferably made of polyethylene (PE) and a rotational-molded tank produced by the method. The main purpose of the invention is to increase the temperature stability of the tank, which results in an increased working range of the tank from a former upper level of maximum 50°C up to an upper level of 100°C. This will lead to an increase of possible working areas of such tanks.

### Background art

Rotational molding is a well-known process for producing for example hollow plastic containers, tanks and the like, and where the product itself may have complicated form. The most important steps of the molding process for producing a rotational-molded product are: loading polymer material into a mold, heating the mold in an oven and at the same time rotating the mold around different rotational axes until the polymer has melted and adhered to walls of the mold and finally cooling the mold. When the mold is cooling down, the hollow rotational-molded product shrinks and releases from the mold walls and may be taken out from the mold, and the production process is ended.

Rotational molded tanks are used in a number of different applications such as petrol tanks for boats, vehicles, agricultural vehicles, handheld tools etc. Other areas are for example tanks for use in chemical industry, in biogas plants as digesting tanks for storing and processing digesting sludge and the like. The tanks are normally made of polyethylene (PE) or polypropylene (PP) as the materials are especially suitable for rotational-molded tanks for storage, mixing and dispensing of acid and alkaline liquids, wastewater and HVAC industry, process industry, pharmaceutical, food and chemical industries. The tanks may be open, closed, cylindrical, rectangular, with flat or conical bottom etc, and the tanks may also be equipped with accessories such as connections, valves, trolleys, pumps, pipes and more.

Because products produced by rotational molding are manufactured in a whole piece without joints or in-built tensions, they have no weak points. Further, good corrosion and chemical resistance provides long life and high durability. No joints also provide easy cleaning of the products, especially the inside which otherwise could be hard to clean properly. Another advantage of rotational-molded products is that they, at the end of the product life cycle, are fully recyclable. Known rotational-molded tanks may be used within a temperature range from approximately -30°C up to +50°C.

Rotational-molded tanks normally are manufactured in various sizes, between about 100-15,000 liters. One problem with using PE is that the material cannot handle high temperatures, that is temperature above approximately 50°C. Above this temperature, the material becomes too soft and thus, the tank is deformed. This problem is particularly noticeable in the case of big rotational-molded tanks. The technical problem that needs to be solved is to provide an increased temperature stability for rotational molded tanks of PE plastic even at temperatures above 50°C, preferably up to 90-100°C would be desirable.

Known solutions that meet these chemical and heat resistance requirements include glass fiber reinforced tanks and stainless-steel tanks. However, these are significantly more expensive and do not provide the same degree of freedom in terms of shape as a rotational-molded tank provides.

A known fiberglass-reinforced plastic pressure tank is known by the patent CA 1 283 063 C, which disclose a method for producing the tank and how to improve its strength by enclosing a cylindrically shaped fabric envelope around the tank, such as the envelope encloses the tank in a tight manner. After this, a layer of protective and stabilizing plastic is applied to the envelope-enclosed container. The solution has a disadvantage by the need of the final step, where a layer of plastic is applied to the envelope-enclosed tank which drives the production cost of the tank.

Another solution to improve the strength of a tank is disclosed in US 5 430 927 A, in which a method for constructing a double-walled tank is disclosed. The method discloses forming two containers and how to bond the two containers to each other by putting one container into the other and use hot and cold water to make the outer container shrink and the inner container to expand. The method is complicated and needs equipment for apply and remove hot and cold water in different steps which drives the production cost of the tank.

Yet another solution is presented in US 2005/129889 A1, which discloses a reinforced rotational-molded tank which comprises an intermediate or bondable layer which is mechanically attached to an inner layer which forms a substantial enclosure. The intermediate layer can include a fibrous material, while the inner layer can include a chemical inert material. An outer layer is bonded to the intermediate layer and surrounds at least a portion of the inner layer. The outer layer can be a reinforced layer and can include fiber in a resin matrix. The production process is quite complicated why the rotational-molded tank may be expensive.

### Summary of the invention

It is an object of the invention to address at least some of the problems and issues outlined above. It is possible to achieve these objects and others by a method for reinforcing a rotational-molded tank, a reinforced rotational-molded tank and a method for producing a reinforced rotational-molded tank as defined in the attached independent claims.

According to an aspect of the invention a method for reinforcing a rotational-molded tank is disclosed, which enables a reinforcement as such but also higher temperature resistance of the reinforced tank, such as the tank may be used at applications with higher temperatures of the content in the tank compared to known prior art. The rotational-molded tank comprises a bottom, a circumference side wall and preferably a top and the circumference side wall has an outer periphery. The method for reinforcing the rotational-molded tank comprises the steps of providing the rotational-molded tank; providing a reinforcing envelope, which envelope comprises at least one open end and at least an enveloping wall, the enveloping wall has an inner periphery corresponding substantially to the outer periphery of the side wall of the rotational-molded tank; wrap the reinforcing envelope around the rotational-molded tank such that the reinforcing envelope covers at least half of a height of the side wall of the rotational-molded tank. This enables a reinforcement of the rotational-molded tank such as the temperature resistance of the rotational-molded tank is increased from a former upper level of around +50°C to a new upper level of up to 100°C. This is a major improvement of the temperature range compared to known prior art, which enables a great number of application possibilities for rotational-molded tanks. Further, the method is very cost-efficient compared to known solutions for increasing stability and temperature resistance, such as glass fiber reinforced tanks and stainless-steel tanks.

Further, the rotational-molded tank is made of plastic, preferably polyethylene (PE) or polypropylene (PP). The materials are especially suitable for rotational-molded tanks for storage, mixing and dispensing of acid and alkaline liquids, wastewater, HVAC applications, process industry, pharmaceutical, food and chemical industries. By reinforcing the rotational-molded tank made of plastic, the plastic tank becomes useable also at applications where the content fluid has possible temperature exceeding the normal temperature limit of the plastic material, which make the invention very cost-efficient compared to prior art solutions.

Further, the reinforcing envelope is made of fabric-reinforced rubber. It is preferred to use the fabric-reinforced rubber material which is a woven standard material which normally is used in complete other applications for example as flat belts for flat belt operation of machine applications using drive wheels and also as conveyor belts at conveyor systems. The material is a woven material that is completely resistant to stretching/dilatation and the material is lacking joints which is also an advantage. The fabric-reinforced rubber material is only 2.5-3 mm but compared to a normal conveyor belt or the like, the "belt" in principle has the same height as the side walls of the tank or at least more than half of the height of the side wall. Since the fabric-reinforced rubber is stiff and lacking joints and also encloses the perimeter of the tank, there is no possibility for the tank to expand outwards. The tank made of plastic thus cope with the chemicals while the reinforcing envelope ("sock") counteracts any deformation due to temperature. The solution creates a support that acts in the opposite direction to the deformation, and any downward axial deformation is absorbed by the floor (or the substrate on which the tank stands) and axial forces upward do not occur since the system is not exposed to high pressure.

According to an aspect of the invention, the wrapping of the rotational-molded tank is performed by that the reinforcing envelope is pulled over the tank through the open end of the reinforcing envelope. By that the reinforcing envelope is produced as a separate cover, with at least one open end, the reinforcing envelope may easily be pulled over an already produced rotational-molded tank. This means that the tank may be produced as a normal tank for use in applications with low demands of temperature resistance, and any tank may be reinforced in an easy manner by the reinforcing envelope, as it is a separate part. A producer of rotational-molded tanks may keep a stock of standard tanks which easily may be "transformed" to a high-end tank with higher profit according to the cost-efficient method.

According to an embodiment, the wrapping of the rotational-molded tank is performed such as the reinforcing envelope covering around 75 % of the height of the side wall of the rotational-molded tank. Such an arrangement is often good enough to ensure a temperature stable rotational-molded tank since the content in the tank (the fluid or the like) not always fill the entire tank, due to that temperature variations of the fluid needs room for expansion.

According to another embodiment, the wrapping of the rotational-molded tank is performed such as the reinforcing envelope covering the entire height of the side wall of the rotational-molded tank. This is a totally safe solution for making the tank stable, and not lose the shape depending on high temperature of the content. Compared to prior art, the solution provides possibility to have large containers/tanks produced by rotational molding, without occupying large floor space, since the tanks may be higher than other large rotational-molded tanks with no reinforcing envelope. The same cost-advantage compared to glass fiber reinforced tanks and stainless-steel tanks.

According to an embodiment, the rotational-molded tank is a cylindrical tank and the reinforcing envelope is a cylindrical envelope with two open ends. By that, the envelope is tube-shaped, and may be applied to the tank by pulling over the reinforcing envelope over the tank, such as the envelope only covering the side wall, not the bottom. Since the invention is especially well-suited for large containers or tanks it is appropriate to let the rotational-molded tank stand on for example a floor, while pulling over the envelope. This provides a very easy assembly method of the envelope to the tank. Compared to complicated production processes for reinforcing the material of the tank, i.e. with glass fiber or the like, it is a very quick and cost-effective solution.

According to another aspect of the invention, a reinforced rotational-molded tank produced by rotational molding is disclosed, which tank enables a reinforcement of the tank and higher temperature resistance of the reinforced tank, such as the tank may be used at applications with higher temperatures of the content in the tank compared to known prior art. The rotational-molded tank comprises a bottom, a circumference side wall and preferably a top and the circumference side wall has an outer periphery. Further, the rotational-molded tank comprises a reinforcing envelope, which envelope comprises at least one open end and at least an enveloping wall, the enveloping wall has an inner periphery corresponding substantially to the outer periphery of the side wall of the rotational-molded tank. The reinforcing envelope is wrapped around the rotational-molded tank such that the reinforcing envelope covers at least half of a height of the side wall of the rotational-molded tank. This reinforcement of the tank improves the temperature resistance of the rotational-molded tank such that a former upper level of around +50°C is increased up to a new upper level of around 100°C, which is a major improvement of the temperature range compared to known prior art. This enables a wider range of applications for rotational-molded tanks and the reinforced tank is very cost-efficient compared to known solutions for increasing temperature resistance of rotational-molded tanks.

Further, the rotational-molded tank is made of plastic, preferably polyethylene (PE) or polypropylene (PP). As mentioned above, these materials are suitable for rotational-molded tanks acid and alkaline liquids, wastewater, HVAC applications, process industry, pharmaceutical, food and chemical industries. By a reinforced rotational-molded tank made of plastic, the plastic tank is useful at applications where the content fluid has possible temperatures exceeding the normal temperature limit of the plastic material, which make the tank very cost-efficient compared to prior art solutions.

Further, the reinforcing envelope is made of fabric-reinforced rubber. It is preferred to use the fabric-reinforced rubber material which is a woven material, completely resistant to stretching/dilatation and the material is also lacking joints which is an advantage. The fabric-reinforced rubber material is preferably 2.5-3 mm thick and has the same height as the side walls of the tank or at least more than half of the height of the side wall. Since the fabric-reinforced rubber is stiff and lacking joints and also encloses the perimeter of the tank smoothly, there is no possibility for the tank to expand outwards. The tank made of plastic withstands the chemicals and the reinforcing envelope counteracts any deformation due to temperature. The reinforced rotational-molded tank is very cost-efficient compared to prior art and provides wider range of application possibilities, compared to known art.

According to an embodiment of the reinforced rotational-molded tank, the reinforcing envelope covers around 75 % of the height of the side wall of the rotational-molded tank.

According to another embodiment of the reinforced rotational-molded tank, the reinforcing envelope covering the entire height of the side wall of the rotational-molded tank.

According to yet an embodiment, the rotational-molded tank is a cylindrical tank and the reinforcing envelope is a cylindrical envelope with two open ends, thus, the envelope is tube-shaped. The reinforcing envelope is applied to the outside of the tank by pulling over the reinforcing envelope over the tank, such as the envelope only covering the side wall, not the bottom.

According to another aspect of the invention, a method for producing a reinforced rotational-molded tank is disclosed. The method comprises the steps of loading polymer material into a mold; heating the mold in an oven and simultaneously rotating the mold around at least two different rotational axes until the polymer has melted and adhered to walls of the mold; cooling the mold; opening the mold and taking out the rotational-molded tank from the mold. The rotational-molded tank comprises a bottom, a circumference side wall and preferably a top and the circumference side wall having an outer periphery. The method further comprising the steps of wrapping a reinforcing envelope around the rotational-molded tank. The reinforcing envelope comprises at least one open end and at least an enveloping wall and the enveloping wall having an inner periphery corresponding substantially to the outer periphery of the side wall of the rotational-molded tank. The reinforcing envelope is applied around the tank such as it covers at least half of a height of the side wall of the rotational-molded tank, to reinforce the rotational-molded tank. The production of the reinforced rotational-molded tank is far more simple and cost-efficient compared to production processes where the reinforcement of the tank is made as a certain production step in the molding process, for example adding glass fiber or the like to the mold etc.

According to an embodiment of the method for producing the reinforced rotational-molded tank above, the wrapping of the rotational-molded tank is performed by that the reinforcing envelope is pulled over the tank through the open end of the reinforcing envelope. As the tank is produced as a normal tank for use in applications with low demands of temperature resistance, and then reinforced in an easy manner by threading the reinforcing envelope over the tank, the standard - on-stock- tank may be "transformed" to a high-end tank.

The invention is also applicable at other types of plastic materials than PE, as for example all kinds of polyolefines but also other plastic tanks that's needs to be reinforced, made of for example PP, ABS, PA, PVC, POM, Polyesters, PC or PCDF.

It is also to be mentioned that the reinforcing envelope is applicable at all types of tanks which needs to be reinforced. For unique tanks or low number of production series it is relatively common to use plastic plates or sweeps which are welded together into a tank with a number of welding joints, that is, the tank is not rotational-molded. For example, plastic tanks made of plates of PE or other plastic material and which are welded together into a tank, may be reinforced by wrapping a reinforcing envelope as according to the invention, to reinforce or stabilize the tank for improved temperature range or just make the tank more stable.

Further possible features and benefits of this solution will become apparent from the detailed description below.

### Brief description of drawings

The solution will now be described in more detail by means of exemplary embodiments and with reference to the accompanying drawings, in which:
Fig. 1 is a perspective view of a rotational-molded tank according the invention.
Fig. 2 is a perspective view of a reinforcing envelope according to the invention.
Fig. 3 is perspective view over the rotational-molded tank and the reinforcing envelope, where the reinforcing envelope is ready to be pulled over the tank for reinforcing the same.
Fig. 4 is a perspective view over the reinforced rotational-molded tank according to the invention with the reinforcing envelope wrapped around the tank as a reinforcing outer layer.

### Detailed description

Briefly described, a method for reinforcing a rotational-molded tank and a rotational-molded tank is disclosed, which provides a very cost-efficient and well-functioning solution for increasing temperature resistance of the rotational-molded tank. In turn, increased temperature resistance provides a wider range of applications for rotational-molded tanks.

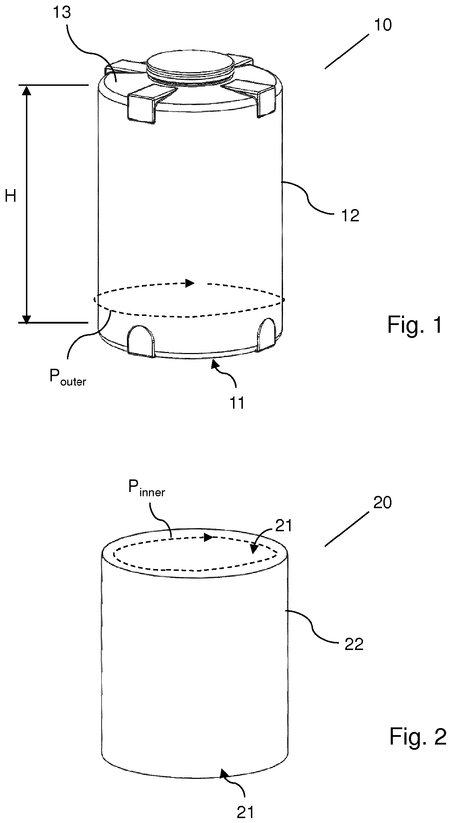

Fig. 1 shows a perspective view of a rotational-molded tank 10 produced by rotational molding. The rotational molding process may be described according to the following method steps, starting with loading polymer material, preferably polyethylene (PE) or polypropylene (PP), into a mold, heating the mold in an oven and simultaneously rotating the mold around at least two different rotational axes until the polymer has melted and adhered to walls of the mold, which forms the shape of the hollow tank. The shape may be various and simple or very complex, and the tank walls are seamless and have no built-in stress. After shaping the tank, the next steps follow with cooling the mold and after that opening the mold and finally taking out the rotational-molded tank from the mold.

The rotational-molded tank 10 now comprises a bottom 11, a circumference side wall 12 and preferably a top 13, as shown in the figure. Pipe-connections, lids and other accessories may of course be fitted in the tank 10, normally in the upper region of the tank 10, but the rotational-molded tank 10 in Fig. 1 is a simplified version only comprising a lid positioned at the top 13. The circumference side wall 12 has an outer periphery Pₒᵤₜₑᵣ. In the figure, the tank is cylindrical, but other forms are of course possible such as rectangular, cubic, irregular forms etc. By the outer periphery Pₒᵤₜₑᵣ is meant that it follows the shape of the side wall 12. For the cylindrical shape showed in Fig. 1, the outer periphery Pₒᵤₜₑᵣ follows the cylindrical circumference of the side wall 12. If the rotational-molded tank 10 for example has a rectangular form, the outer periphery Pₒᵤₜₑᵣ follows the circumference side wall 12, which in that case consists of four walls connected in the corners, why the outer periphery Pₒᵤₜₑᵣ follows each wall and around the corners. The side wall 12 of the rotational-molded tank 10 has a height H and since the tank is made of polymer and is rotational molded, it is especially suitable for large volumes, up to 15,000 liters, of for example acid or alkaline liquids, wastewater, process water and the like. Since the PE material having poor temperature resistance but having suitable properties for the contents of the tank, the height H may be a problem. Since the wanted volumes of tanks in these applications are large and the floor space occupied by the tanks often is limited, the height H is important. Forces acting on the tank 10 in the axial direction is limited to down-force from the content, since high pressure inside the tank 10 is normally not at hand in these applications. The down-force is handled by that the tank 10 normally is positioned directly with the bottom 11 on a floor or the like.

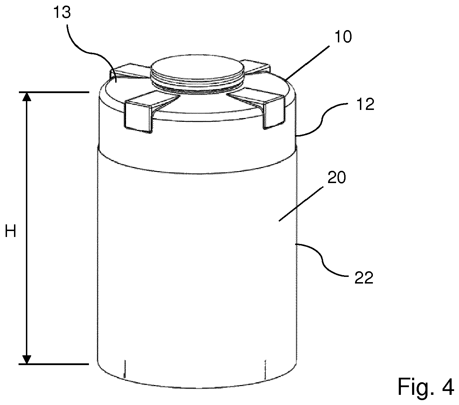

Fig. 2 shows a perspective view of a reinforcing envelope 20 according to the invention. The reinforcing envelope 20 is a cylindrical envelope with two open ends 21 and an enveloping wall 22. The enveloping wall 22 has an inner periphery Pᵢₙₙₑᵣ corresponding substantially to the outer periphery Pₒᵤₜₑᵣ of the side wall 12 of the rotational-molded tank 10, which can be seen in Fig. 4. The reinforcing envelope 20 is made of fabric-reinforced rubber, which is a woven material, completely resistant to stretching/dilatation and the material is also lacking joints. The fabric-reinforced rubber material is preferably 2.5-3 mm thick and has the same height as the side walls 12 of the tank 10 or at least more than half of the height of the side wall 12. The reinforcing envelope 20 is custom-made for fitting the form of the rotational-molded tank 10. Since the fabric-reinforced rubber is stiff and lacking joints and also encloses the perimeter of the tank 10 smoothly, there is no possibility for the tank 10 to expand outwards, see also Fig. 4.

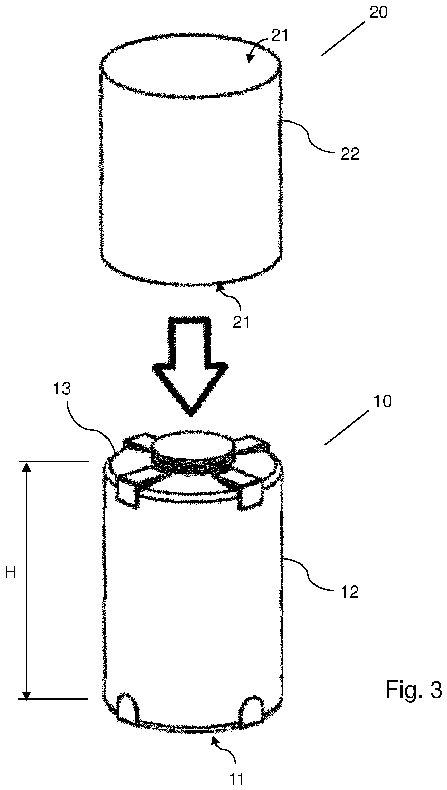

Fig. 3 shows a perspective view over the rotational-molded tank 10 and the reinforcing envelope 20, where the reinforcing envelope 20 is ready to be wrapped/fitted on the outside of the tank 10 for reinforcing the same. The reinforcing envelope 20 is about to be applied to the outside of the rotational-molded tank 20 by pulling over the reinforcing envelope 20 over the tank 10 through the lower open end 21, such as the reinforcing envelope 20 covers the side wall 12 of the tank 10, not the bottom 11. As the enveloping wall 22 of the reinforcing envelope 20 has an inner periphery Pᵢₙₙₑᵣ substantially corresponding to the outer periphery Pₒᵤₜₑᵣ of the side wall 12 of the rotational-molded tank 10, the reinforcing envelope 20 fits the outside of the tank 10 smoothly. Of course, a suitable gap wide enough for enabling the wrapping of the envelope 20 outside the tank 10 is needed. As the reinforcing envelope 20 is a separate part, the rotational-molded tank 10 may be produced as a standard tank and may be kept on stock if applicable. If the rotational-molded tank 10 is to be used in an application with higher temperature than up to about 50°C, the standard tank may be reinforced with a custom-made reinforcing envelope 20 anytime after the production of the tank, that is even out on site when the tank is already delivered. Since application may vary over time it is a great advantage to be able to reinforce a rotational-molded tank at a later stage if the need has changed.

Fig. 4 shows a perspective view over the reinforced rotational-molded tank 10 according to the invention with the reinforcing envelope 20 wrapped around the tank 10 as a reinforcing outer layer. In Fig. 4, the reinforcing envelope 20 covers approximately 80% of the height H of the side wall 12, which often is enough since the tanks normally not are totally filled with content. The upper region also normally has pipe-connections, accessories etc. why it may be appropriate to have an unwrapped upper section of the tank 10.

Reference to an element in the singular is not intended to mean "one and only one" unless explicitly so stated, but rather "one or more."

## Claims

1. A method for reinforcing a rotational-molded tank (10), the method comprising the steps of:
providing the rotational-molded tank (10), the tank (10) comprising a bottom (11), a circumference side wall (12) and preferably a top (13), the circumference side wall (12) having an outer periphery (Pₒᵤₜₑᵣ),
providing a reinforcing envelope (20), the envelope (20) comprising at least one open end (21) and at least an enveloping wall (22), the enveloping wall (22) having an inner periphery (Pᵢₙₙₑᵣ) corresponding substantially to the outer periphery (Pₒᵤₜₑᵣ) of the side wall (12) of the rotational-molded tank (10),
wrapping the reinforcing envelope (20) around the rotational-molded tank (10) such that the reinforcing envelope (20) covering at least half of a height (H) of the side wall (12) of the rotational-molded tank (10), to reinforce the rotational-molded tank (10),
wherein the rotational-molded tank (10) is made of plastic, **characterized by** that Z the reinforcing envelope (20) is made of fabric-reinforced rubber.

2. Method for reinforcing a rotational-molded tank (10) according to claim 1, wherein the wrapping of the rotational-molded tank (10) is performed by that the reinforcing envelope (20) is pulled over the tank (10) through the open end (21) of the reinforcing envelope (20).

3. Method for reinforcing a rotational-molded tank (10) according to claim 1 or 2, wherein the wrapping of the rotational-molded tank (10) is performed such as the reinforcing envelope (20) covering around 75 % of the height (H) of the side wall (12) of the rotational-molded tank (10).

4. Method for reinforcing a rotational-molded tank (10) according to any of claim 1 or 2, wherein the wrapping of the rotational-molded tank (10) is performed such as the reinforcing envelope (20) covering the entire height (H) of the side wall (12) of the rotational-molded tank (10).

5. Method for reinforcing a rotational-molded tank (10) according to any of the preceding claims, wherein the rotational-molded tank (10) is a cylindrical tank (10) and the reinforcing envelope (20) is a cylindrical envelope (20) with two open ends (21), thus the envelope (20) is tube-shaped, wherein the wrapping of the tank (10) is performed such as the envelope (20) only covering the side wall (12), not the bottom (11), when wrapped around the rotational-molded tank (10).

6. A reinforced rotational-molded tank (10), produced by rotational molding, the rotational-molded tank (10) comprising:
a bottom (11),
a circumference side wall (12), and
preferably a top (13),
wherein the circumference side wall (12) having an outer periphery (Pₒᵤₜₑᵣ),
a reinforcing envelope (20), the envelope (20) comprising at least one open end (21) and at least an enveloping wall (22), the enveloping wall (22) having an inner periphery (Pᵢₙₙₑᵣ) corresponding substantially to the outer periphery (Pₒᵤₜₑᵣ) of the side wall (12) of the rotational-molded tank (10), wherein the reinforcing envelope (20) is wrapped around the rotational-molded tank (10) such as the reinforcing envelope (20) covering at least half of a height (H) of the side wall (12) of the rotational-molded tank (10),
wherein the rotational-molded tank (10) is made of plastic, **characterized by** that the reinforcing envelope (20) is made of fabric-reinforced rubber.

7. Rotational-molded tank (10) according to claim 6, wherein the reinforcing envelope (20) covering around 75 % of the height (H) of the side wall (12) of the rotational-molded tank (10).

8. Rotational-molded tank (10) according to claim 6, wherein the wrapping of the rotational-molded tank (10) is performed such as the reinforcing envelope (20) covering the entire height (H) of the side wall (12) of the rotational-molded tank (10).

9. Rotational-molded tank (10) according to any of claim 6 - 8, wherein the rotational-molded tank (10) is a cylindrical tank (10) and the reinforcing envelope (20) is a cylindrical envelope (20) with two open ends (21), thus the envelope (20) is tube-shaped, wherein the reinforcing envelope (20) only covering the side wall (12) of the rotational-molded tank (10), not the bottom (11), when wrapped around the rotational-molded tank (10).

## Patentansprüche

1. Verfahren zum Verstärken eines rotationsgeformten Behälters (10), wobei das Verfahren die folgenden Schritte umfasst:
Bereitstellen des rotationsgeformten Behälters (10), wobei der Behälter (10) einen Boden (11), eine Umfangsseitenwand (12) und vorzugsweise einen Deckel (13) umfasst, wobei die Umfangsseitenwand (12) einen Außenumfang (Pₒᵤₜₑᵣ) aufweist,
Bereitstellen einer Verstärkungshülle (20), wobei die Hülle (20) mindestens ein offenes Ende (21) und mindestens eine Umhüllungswand (22) umfasst, wobei die Umhüllungswand (22) einen Innenumfang (Pᵢₙₙₑᵣ) aufweist, der im Wesentlichen dem Außenumfang (Pₒᵤₜₑᵣ) der Seitenwand (12) des rotationsgeformten Behälters (10) entspricht,
Wickeln der Verstärkungshülle (20) um den rotationsgeformten Behälter (10), sodass die Verstärkungshülle (20) mindestens die Hälfte einer Höhe (H) der Seitenwand (12) des rotationsgeformten Behälters (10) bedeckt, um den rotationsgeformten Behälter (10) zu verstärken,
wobei der rotationsgeformte Behälter (10) aus Kunststoff hergestellt ist, **dadurch gekennzeichnet, dass** die Verstärkungshülle (20) aus gewebeverstärktem Gummi hergestellt ist.

2. Verfahren zum Verstärken eines rotationsgeformten Behälters (10) gemäß Anspruch 1, wobei das Umwickeln des rotationsgeformten Behälters (10) dadurch durchgeführt wird, dass die Verstärkungshülle (20) durch das offene Ende (21) der Verstärkungshülle (20) über den Behälter (10) gezogen wird.

3. Verfahren zum Verstärken eines rotationsgeformten Behälters (10) gemäß Anspruch 1 oder 2, wobei das Umwickeln des rotationsgeformten Behälters (10) so durchgeführt wird, dass die Verstärkungshülle (20) etwa 75 % der Höhe (H) der Seitenwand (12) des rotationsgeformten Behälters (10) bedeckt.

4. Verfahren zum Verstärken eines rotationsgeformten Behälters (10) gemäß Anspruch 1 oder 2, wobei das Umwickeln des rotationsgeformten Behälters (10) so durchgeführt wird, dass die Verstärkungshülle (20) die gesamte Höhe (H) der Seitenwand (12) des rotationsgeformten Behälters (10) bedeckt.

5. Verfahren zum Verstärken eines rotationsgeformten Behälters (10) gemäß einem der vorhergehenden Ansprüche, wobei der rotationsgeformte Behälter (10) ein zylindrischer Behälter (10) ist und die Verstärkungshülle (20) eine zylindrische Hülle (20) mit zwei geöffneten Enden (21) ist, sodass die Hülle (20) rohrförmig ist, wobei das Umwickeln des Behälters (10) so durchgeführt wird, dass die Hülle (20) nur die Seitenwand (12), nicht aber den Boden (11) bedeckt, wenn sie um den rotationsgeformten Behälter (10) gewickelt wird.

6. Verstärkter rotationsgeformter Behälter (10), hergestellt durch Rotationsformung, wobei der rotationsgeformte Behälter (10) umfasst:
einen Boden (11),
eine Umfangsseitenwand (12), und
vorzugsweise einen Deckel (13),
wobei die Umfangsseitenwand (12) einen Außenumfang (Pₒᵤₜₑᵣ) aufweist,
eine Verstärkungshülle (20), wobei die Hülle (20) mindestens ein offenes Ende (21) und mindestens eine Umhüllungswand (22) umfasst, wobei die Umhüllungswand (22) einen Innenumfang (Pᵢₙₙₑᵣ) aufweist, der im Wesentlichen dem Außenumfang (Pₒᵤₜₑᵣ) der Seitenwand (12) des rotationsgeformten Behälters (10) entspricht, wobei die Verstärkungshülle (20) um den rotationsgeformten Behälter (10) gewickelt ist, sodass die Verstärkungshülle (20) mindestens die Hälfte einer Höhe (H) der Seitenwand (12) des rotationsgeformten Behälters (10) bedeckt, wobei der rotationsgeformte Behälter (10) aus Kunststoff hergestellt ist, **dadurch gekennzeichnet, dass** die Verstärkungshülle (20) aus gewebeverstärktem Gummi hergestellt ist.

7. Rotationsgeformter Behälter (10) gemäß Anspruch 6, wobei die Verstärkungshülle (20) etwa 75 % der Höhe (H) der Seitenwand (12) des rotationsgeformten Behälters (10) bedeckt.

8. Rotationsgeformter Behälter (10) gemäß Anspruch 6, wobei das Umwickeln des rotationsgeformten Behälters (10) so durchgeführt wird, dass die Verstärkungshülle (20) die gesamte Höhe (H) der Seitenwand (12) des rotationsgeformten Behälters (10) bedeckt.

9. Rotationsgeformter Behälter (10) gemäß einem der Ansprüche 6-8, wobei der rotationsgeformte Behälter (10) ein zylindrischer Behälter (10) ist und die Verstärkungshülle (20) eine zylindrische Hülle (20) mit zwei geöffneten Enden (21) ist, die Hülle (20) also rohrförmig ist, wobei die Verstärkungshülle (20) nur die Seitenwand (12) des rotationsgeformten Behälters (10), nicht aber den Boden (11) bedeckt, wenn sie um den rotationsgeformten Behälter (10) gewickelt ist.

## Revendications

1. Procédé de renforcement d'une cuve moulée par rotation (10), le procédé comprenant les étapes suivantes :
obtention de la cuve moulée par rotation (10), la cuve (10) comprenant un fond (11), une paroi latérale circonférentielle (12) et de préférence un dessus (13), la paroi latérale circonférentielle (12) ayant une périphérie externe (Pₒᵤₜₑᵣ),
obtention d'une enveloppe de renforcement (20), l'enveloppe (20) comprenant au moins une extrémité ouverte (21) et au moins une paroi d'enveloppement (22), la paroi d'enveloppement (22) ayant une périphérie interne (Pᵢₙₙₑᵣ) correspondant sensiblement à la périphérie externe (Pₒᵤₜₑᵣ) de la paroi latérale (12) de la cuve moulée par rotation (10),
enfilage de l'enveloppe de renforcement (20) autour de la cuve moulée par rotation (10) de manière à ce que l'enveloppe de renforcement (20) recouvre au moins la moitié d'une hauteur (H) de la paroi latérale (12) de la cuve moulée par rotation (10), pour renforcer la cuve moulée par rotation (10),
dans lequel la cuve moulée par rotation (10) est constituée de plastique, **caractérisé en ce que** l'enveloppe de renforcement (20) est constituée de caoutchouc renforcé de tissu.

2. Procédé de renforcement d'une cuve moulée par rotation (10) selon la revendication 1, dans lequel l'emballage de la cuve moulée par rotation (10) est effectué par une opération dans laquelle l'enveloppe de renforcement (20) est tirée par-dessus la cuve (10) par l'extrémité ouverte (21) de l'enveloppe de renforcement (20) .

3. Procédé de renforcement d'une cuve moulée par rotation (10) selon la revendication 1 ou 2, dans lequel l'emballage de la cuve moulée par rotation (10) est effectué de manière à ce que l'enveloppe de renforcement (20) recouvre environ 75 % de la hauteur (H) de la paroi latérale (12) de la cuve moulée par rotation (10).

4. Procédé de renforcement d'une cuve moulée par rotation (10) selon l'une quelconque des revendications 1 et 2, dans lequel l'emballage de la cuve moulée par rotation (10) est effectué de manière à ce que l'enveloppe de renforcement (20) recouvre la totalité de la hauteur (H) de la paroi latérale (12) de la cuve moulée par rotation (10).

5. Procédé de renforcement d'une cuve moulée par rotation (10) selon l'une quelconque des revendications précédentes, dans lequel la cuve moulée par rotation (10) est une cuve cylindrique (10) et l'enveloppe de renforcement (20) est une enveloppe cylindrique (20) avec deux extrémités ouvertes (21), l'enveloppe (20) étant ainsi en forme de tube, l'emballage de la cuve (10) étant effectué de manière à ce que l'enveloppe (20) recouvre uniquement la paroi latérale (12), mais pas le fond (11), lorsqu'elle est enfilée autour de la cuve moulée par rotation (10).

6. Cuve moulée par rotation renforcée (10), produite par moulage par rotation, la cuve moulée par rotation (10) comprenant :
un fond (11),
une paroi latérale circonférentielle (12), et
de préférence un dessus (13),
la paroi latérale circonférentielle (12) ayant une périphérie externe (Pₒᵤₜₑᵣ),
une enveloppe de renforcement (20), l'enveloppe (20) comprenant au moins une extrémité ouverte (21) et au moins une paroi d'enveloppement (22), la paroi d'enveloppement (22) ayant une périphérie interne (Pᵢₙₙₑᵣ) correspondant sensiblement à la périphérie externe (Pₒᵤₜₑᵣ) de la paroi latérale (12) de la cuve moulée par rotation (10), l'enveloppe de renforcement (20) étant enfilée autour de la cuve moulée par rotation (10) de manière à ce que l'enveloppe de renforcement (20) recouvre au moins la moitié d'une hauteur (H) de la paroi latérale (12) de la cuve moulée par rotation (10),
la cuve moulée par rotation (10) étant constituée de plastique, **caractérisée en ce que** l'enveloppe de renforcement (20) est constituée de caoutchouc renforcé de tissu.

7. Cuve moulée par rotation (10) selon la revendication 6, l'enveloppe de renforcement (20) recouvrant environ 75 % de la hauteur (H) de la paroi latérale (12) de la cuve moulée par rotation (10).

8. Cuve moulée par rotation (10) selon la revendication 6, l'emballage de la cuve moulée par rotation (10) étant effectué de manière à ce que l'enveloppe de renforcement (20) recouvre la totalité de la hauteur (H) de la paroi latérale (12) de la cuve moulée par rotation (10).

9. Cuve moulée par rotation (10) selon l'une quelconque des revendications 6 à 8, la cuve moulée par rotation (10) étant une cuve cylindrique (10) et l'enveloppe de renforcement (20) étant une enveloppe cylindrique (20) avec deux extrémités ouvertes (21), l'enveloppe (20) étant ainsi en forme de tube, l'enveloppe de renforcement (20) recouvrant uniquement la paroi latérale (12) de la cuve moulée par rotation (10), mais pas le fond (11), lorsqu'elle est enfilée autour de la cuve moulée par rotation (10).
